# EUROPÄISCHE PATENTSCHRIFT

(11) **EP 2 839 098 B1**
(45) Veröffentlichungstag und Bekanntmachung des Hinweises auf die Patenterteilung: **05.02.2020**
(21) Anmeldenummer: 13716202.0
(22) Anmeldetag: 03.04.2013
(51) Int. Cl.: F03D 13/20, E04H 12/10, E02B 17/02, E02B 17/00

(54) **GITTERTURM FÜR WINDENERGIEANLAGEN UND VERFAHREN ZUR ERRICHTUNG EINES SOLCHEN GITTERTURMES**
LATTICE TOWER FOR WIND TURBINES AND METHOD FOR ERECTING SUCH A LATTICE TOWER
PYLÔNES EN TREILLIS POUR INSTALLATIONS ÉOLIENNES ET PROCÉDÉ POUR ÉRIGER UN TEL PYLÔNE EN TREILLIS

(30) Priorität: 16.04.2012 DE 102012007425
(43) Veröffentlichungstag der Anmeldung: 25.02.2015
(73) Patentinhaber: Senvion GmbH, 22297 Hamburg (DE)
(72) Erfinder: SEIDEL, Marc, 49082 Osnabrück (DE)
(74) Vertreter: Glawe, Delfs, Moll
(86) Internationale Anmeldenummer: PCT/EP2013/000980
(87) Internationale Veröffentlichungsnummer: WO 2013/156110

(56) Entgegenhaltungen:
- EP-A1- 2 362 036
- EP-A2- 2 067 914
- WO-A1-94/19605
- WO-A1-2011/147474
- AT-B- 140 484
- GB-A- 361 794
- GB-A- 978 678
- US-A- 1 685 696
- US-A1- 2004 128 940
- US-A1- 2009 249 707

## Beschreibung

Die Erfindung betrifft einen Gitterturm für eine Windenergieanlage gemäß dem Oberbegriff des Anspruchs 1. Weiterhin betrifft die Erfindung ein Verfahren zur Errichtung eines solchen Gitterturmes für eine Windenergieanlage gemäß den nebengeordneten Ansprüchen 8 und 11 sowie einen aus vorgefertigten Modulen aufgebauten Gitterturm nach Anspruch 9.

Gittertürme für Windenergieanlagen sind dreidimensionales Gebilde, die aus Eckstielen und dazwischen verlaufenden Streben bestehen. Die Eckstiele verlaufen im errichteten Zustand des Turmes mit einer gewissen Neigung in vertikaler Richtung, da sich die Gittertürme in der Regel vom unteren bis zum oberen Ende hin im Durchmesser verjüngen. Die Streben können zum Einen auf den Turmseitenflächen zwischen unmittelbar benachbarten Eckstielen verlaufen, zum Anderen zur Erhöhung der Stabilität und der Steifigkeit aber auch quer durch das Gitterturminnere hindurch zu diagonal gegenüberliegenden Eckstielen. Typische Gittertürme weisen drei oder mehr Eckstiele auf, besonders häufig sind Gittertürme mit vier Eckstielen. Daher zeigt die vorliegende Anmeldung als Ausführungsbeispiele ausschließlich Gittertürme mit vier Eckstielen, ohne dass die Erfindung darauf beschränkt ist.

Solche Gittertürme finden zum Beispiel Verwendung als Gründungsstruktur für verschiedenste Offshore-Plattformen. Bekannt sind solche Gitterstrukturen auch bereits als Gründungsstruktur für darauf aufbauende Windenergieanlagen. Dabei können diese Offshore-Windenergieanlagen entweder mit einem Rohrturm auf der Gittergründungsstruktur aufsetzen oder ebenfalls als Gitterturm ausgebildet sein. Die vorliegende Erfindung betrifft sowohl Gittertürme als Gründungsstruktur als auch Gittertürme, die den Turm einer Windenergieanlage ausbilden. Die Erfindung betrifft auch aus mehreren Gitterturmsegmenten aufgebaute Gesamtgittertürme. Die Turmunterteilung in Segmente kann z.B. aus Gründen des besseren Handlings oder der besseren Transportierbarkeit erfolgen, oder um den Gesamtturm in getrennt herstellbare Module zu unterteilen. Nach der vorliegenden Erfindung ist jedes der Gitterturmsegmente als "Gitterturm" im Sinne der Ansprüche zu verstehen.

Gitterturmstrukturen haben gegenüber anderen Konstruktionen den Vorteil eines vergleichsweise geringeren Materialaufwandes bei sehr günstiger Stabilität. Besonders günstige Stabilitätseigenschaften werden erreicht, indem sowohl für die Eckstiele als auch für die Streben Rohre verwendet werden. Rohre werden insbesondere im Offshore-Bereich auch deswegen verwendet, weil sie den geringsten Strömungswiderstand bei Einwirkung von Strömungen und Wellen haben. Um solche aus Rohren zusammengesetzte Gittertürme handelt es sich bei der vorliegenden Erfindung.

Die für Windenergieanlagen benötigten Gittertürme erreichen heutzutage enorme Abmessungen. Es werden Gitterturmhöhen von 100 Meter oder mit steigender Tendenz sogar deutlich größer benötigt, um die wirtschaftlich interessanten Multi-Megawatt-Windenergieanlagen auf die gewünschte Nabenhöhe zu bringen. Problematisch ist der relativ zeit- und arbeitsaufwändige Zusammenbau des Gitterturmes aus den Eckstielen und den Streben. Es wird für die Fertigung ein großer freier Platz benötigt und die Fertigung erfolgt teils in liegender, teils in aufrechter Position der Bauteile der Gittertürme. Insbesondere ist problematisch, dass je nach Aufbau des Gitterturmes eine Vielzahl an Fügeflächen bestehen, die teilweise komplexe dreidimensionale Ausformungen haben. Bevorzugt werden die Eckstiele und die Streben derzeit durch Schweißen miteinander verbunden. Es sind eine Vielzahl von Schweißnähten herzustellen, teilweise über Kopf, wobei diese Schweißnähte einer komplizierten dreidimensionalen Form entsprechen können, so dass eine automatisierte Schweißung kaum möglich ist.

Es ist im Stand der Technik zum Beispiel aus der EP 2067914 A2 bekannt, die als Knoten bezeichneten Verbindungsstellen zwischen den Eckstielen und den Streben als Gussknoten auszubilden. In dieser Schrift werden Gussknoten vorgeschlagen, die sowohl mit den Eckstielen als auch mit den Streben verbunden werden, wobei die Verbindungsflächen zu den Gussknoten bevorzugt als ebene Flächen ausgebildet sind, so dass die herzustellenden Schweißverbindungen ringförmig und somit zumindest leichter automatisiert ausbildbar sind. Grundsätzlich ist dadurch erleichtert, maschinelle Schweißverfahren einzusetzen.

Alternative Gittertürme sind zum Beispiel aus der WO 2011/147474 A1 bekannt. Dort weisen Streben an ihren freien Enden Knotenschalen auf, die an den rohrförmigen Eckstielen mittels Bolzen befestigt werden. Einen ähnlichen Stand der Technik zeigt die WO 2011/1474745 A1, wo ebenfalls einzelne Komponenten eines Gitterturmes mittels Bolzenverbindungen zum Gesamtturm zusammengesetzt werden.

Weiterhin sind aus der US 2004/128940 A1 Knotenschalen bekannt, an denen Streben angeordnet sind. Die Knotenschalen liegen an Eckstielen 2 an, und zwar mit einem Teilumfangsbereich von höchstens 180°, wobei auch mehrere Knotenschalen 1 an einem Knoten angeordnet sein können. Die Knotenschalen sind mehrlagig angeordnet, nämlich in einer inneren Lage und in einer äußeren Lage, die lediglich eine Knotenschale umfasst.

Die WO 94/19605 A1 zeigt an den Knoten eine Rohrstelle, die gebildet ist aus einer mit Streben verbundenen Knotenschale sowie einer zu ihr komplementären Hilfsschale. An dieser Hilfsschale ist keine Strebe angeordnet. Entsprechendes gilt für die GB 361 794 A. Dort ist jeweils genau eine Knotenschale je Knoten vorgesehen. Diese kann gegebenenfalls durch eine Hilfsschale ergänzt sein. Auch für US 1,685,696 A gilt das gleiche. Es offenbart die Anordnung von zwei Streben an einer Knotenschale. Jedoch ist im Knoten nur eine einzige Knotenschale vorgesehen, die ergänzt ist durch eine Hilfsschale. Dies gilt auch für GB 978 678 A. Dort ist die Anordnung von zwei Streben 27 an einer Knotenschale, ergänzt um eine Hilfsschale.

Das Dokument AT 140 484 B offenbart einen Eckstiel, an dem ein Knoten gebildet ist durch eine den Eckstiel umfassende Hülse c. An dieser Hülse sind zwei Streben angeordnet. Die Hülse ist als einteiliges Element dargestellt und umschließt den Eckstiel vollständig.

Es wird bei diesen genannten Gittertürmen des Standes der Technik als nachteilig angesehen, dass der Montage- und Fertigungsaufwand weiterhin sehr hoch ist. Die Möglichkeiten für eine Automatisierung oder eine modulare Fertigung sind sehr eingeschränkt. Insbesondere ist eine Verteilung auf verschiedene Fertigungsstandorte kaum möglich. Es müssen weiterhin teilweise sehr komplizierte Schweißverbindungen in großer Zahl hergestellt werden. Es ist daher die Aufgabe der vorliegenden Erfindung, einen in dieser Hinsicht verbesserten Gitterturm und ein verbessertes Verfahren zur Errichtung eines solchen Gitterturmes aufzuzeigen.

Diese Aufgabe wird nach einem ersten Aspekt der Erfindung gelöst durch einen Gitterturm mit den in den Ansprüchen 1 oder 9 angegebenen Merkmalen. Weiterhin wird diese Aufgabe nach einem zweiten Aspekt der Erfindung durch die in den Ansprüchen 8 und 11 angegebenen Verfahrensmerkmale gelöst. Weitere vorteilhafte Ausgestaltungen sind Gegenstand der Unteransprüche.

Erfindungsgemäß ist vorgesehen, dass die Streben an ihren eckstielseitigen Enden Knotenschalen aufweisen. Diese Knotenschalen sind komplementär zu den Eckstielen so dimensioniert und ausgebildet, dass sie in einen Teilumfangsbereich von bis zu 180° den Eckstielen anliegen können. Die in einem Knoten zusammentreffenden Knotenschalen sollen sich dabei zu einer Gesamtschale ergänzen, und grenzen unmittelbar aneinander. Die Knotenschalen des Knotens werden z.B. am Eckstiel und aneinander befestigt, sodass die entstehende Gesamtschale einen Ring oder Teilring um den Eckstiel ausbildet. Jede Knotenschale umgreift den Eckstiel um nicht mehr als 180°, damit der Eckstiel leicht in die Knotenschale gelegt werden kann, und nicht in Längsrichtung eingeschoben werden muss.

Es ist dadurch möglich und vorteilhaft, dass die Eckstiele nicht wie im Stand der Technik in den Knoten aus Teilrohren zusammengefügt werden, sondern sich in ihrer Längsrichtung einteilig über mehrere Knotenebenen hinweg erstrecken, besonders vorteilhaft über alle Knotenebenen hinweg. Die bisher benötigten Befestigungsarbeiten, in der Regel Schweißarbeiten, für das Zusammensetzen der Eckstiele entfallen.

Grundsätzlich ließe sich an jedem freien Strebenende eine eigene Knotenschale anbringen. Für die Stabilität der Seitenteile und im Sinne einer Reduzierung der benötigten Einzelbauteile ist aber bevorzugt, wenn mehrere Streben an einer gemeinsamen Knotenschale befestigt sind. Gedacht ist hier insbesondere an die freien Enden der zu X-Streben verbundenen Streben in den Bereichen, in denen übereinanderliegende X-Streben zusammentreffen. Dies ist in den mittleren Knotenebenen der Fall. In den äußeren Knotenebenen sind einzelne Knotenschalen sinnvoll.

Die Übertragung von Zugkräften aus den Streben auf die Eckstiele gelingt besser, wenn mit Vorteil entweder die in einem Knoten zusammentreffenden Knotenschalen zusammen den Eckstiel um mehr als 180° umschließen, oder Hilfsschalen vorgesehen werden, die mit den in einem Knoten zusammentreffenden Knotenschalen den Eckstiel um mehr als 180° umschließen. Die Hilfsschalen werden dazu bevorzugt am Eckstiel und an den benachbarten Knotenschalen befestigt, und bilden mit den Knotenschalen einen Ring oder Teilring um den Eckstiel herum, bevorzugt einen geschlossenen Ring. Die Knotenschalen können z.B. 90°-Schalen sein, die Hilfsschale eine 180°-Schale. Die Knotenschalen könnten aber z.B. auch jeweils 180°-Schalen sein und sich dadurch ebenfalls zu einem geschlossenen Ring ergänzen. Die Hilfsschale muss nicht die Höhe der Knotenschalen haben, wobei dies aber die bevorzugte Ausführungsform ist.

Eine einfache Herstellung stabiler Knotenschalen und Hilfsschalen in großer Stückzahl gelingt z.B. dadurch, dass beide aus Stahlguss oder einem anderen geeigneten Gussmaterial hergestellt sind. Die Schalen können auch einfache Stahlbleche sein, die z.B. auch aus Rohren herausgeschnitten werden können.

Eine vorteilhafte Stabilisierung im Knotenbereich der Eckstiele wird dadurch erreicht, dass unmittelbar unterhalb und/oder unmittelbar oberhalb der Knotenschalen und/oder der Hilfsschalen den Eckstiel umgebende Sicherungsringe befestigt sind. Diese dienen als Anschlag und stabilisieren so die Verbindungen im Knotenbereich in Achsrichtung des Eckstiels. Die Sicherungsringe sind bevorzugt mehrteilig ausgebildet, z.B. 2-teilig jeweils als 180°-Schalen, so dass sie nach der Befestigung der Knotenschalen noch am Eckstiel montiert werden können, indem sie z.B. am Eckstiel und/oder an den Knotenschalen und/oder an den Hilfsschalen befestigt werden.

Als vorteilhafte Befestigungsart wird das Verschweißen der verschiedenen Bauteile angesehen. Insbesondere die Verbindung der Knotenschalen und/oder der Hilfsschalen und/oder der Sicherungsringe untereinander lässt sich gut durch Verschweißen herstellen. In alternativer Weise könnten auch Klebebefestigungen eingesetzt werden, wie sie z.B. in dem Artikel Kleben im Stahlbau in der Zeitschrift Stahlbau 75 (2006), Heft 10, Seiten 834ff, Autoren: Markus Feldmann et al. beschrieben werden. Die Verbindung der Knotenschalen und/oder der Hilfsschalen mit den Eckstielen lässt sich z.B. gut durch Verklebung herstellen. Dies gilt auch für die Befestigung der Sicherungsringe an den Eckstielen. Als Klebstoff könnten die aus der Metallklebung bekannten Klebstoffe verwendet werden. Alternativ könnte jedoch z.B. auch Mörtel (Grout) verwendet werden.

Die Verbindung zwischen den Knotenschalen eines Knotens ist dann besonders einfach, wenn sie in gerader Linie aneinandergrenzen. Es ist dann z.B. nur eine leicht zu automatisierende gerade Schweißnaht zu setzen.

Mit Vorteil sind die Knotenschalen an den Streben angeschweißt. Zur Verstärkung dieser Verbindung ist das Vorsehen einer Gegenlage bzw. eine Gegenschweißung von Vorteil. Deswegen weisen die Knotenschalen bevorzugt eine den Zugang zum Rohrinneren der zugehörigen Streben gewährende Öffnung auf.

Das erste erfindungsgemäße Gitterturmerrichtungsverfahren nach Anspruch 13 zeichnet sich dadurch aus, dass in einem ersten Fertigungsschritt die ebenen Seitenteile des Gitterturmes aus Streben hergestellt werden. Dies erfolgt in liegender Position, um komplizierte Handhabung des Seitenteiles zu vermeiden. An die freien Enden der Streben werden dann die bereits oben erläuterten Knotenschalen angebracht. Ein erstes Turmmodul entsteht dadurch, dass zwei Eckstiele an ein erstes ebenes Seitenteil befestigt werden. Analog wird ein identisches zweites Turmmodul hergestellt. Zwischen diese beiden Turmmodule lassen sich dann die noch fehlenden Seitenteile befestigen. Dies kann in liegender Turmausrichtung erfolgen, so dass schließlich der Turm noch aufgerichtet werden muss, wobei zwischen der Montage und dem Aufrichten weitere Verfahrensschritte ausgeführt werden können, z.B. ein Transport zum Aufstellungsort des Turmes.

Ein alternatives Gitterturmerrichtungsverfahren zeichnet sich dadurch aus, dass wie beim vorstehenden Verfahren beschrieben die ebenen Seitenteile gefertigt und die Knotenschalen angebracht werden. An jedem der ebenen Seitenteile wird dann ein Eckstiel befestigt, so dass mehrere identische Turmmodule bestehend aus einem Seitenteil und einem Eckstiel entstehen. Ähnlich wie im vorstehend erläuterten Verfahren lässt sich dann aus diesen Turmmodulen ein Gitterturm zusammensetzen.

Der Zusammenbau des Gitterturmes muss aber nicht in liegender Turmposition erfolgen. Es ist auch möglich, die vorgefertigten Seitenteile und die Eckstiele aufzurichten und in einem Gestell zueinander zu positionieren. Durch Befestigen der Seitenteile an den Eckstielen, nämlich durch Befestigen der freien Knotenschalen im Knotenbereich der Eckstiele, kann dann der Gitterturm zusammengefügt werden.

Es ist bevorzugt, dass ein Korrosionsschutzmittel auf die Eckstiele und auf die Seitenteile aufgebracht wird, bevor die Eckstiele mit den Seitenteilen verbunden werden. Dadurch lässt sich einen vollständige Benetzung mit Korrosionsschutzmittel erreichen, insbesondere auch in den Fügebereichen.

Im Folgenden wird anhand bevorzugter Ausführungsbeispiele und anhand von prinzipienhaften Zeichnungen die Erfindung näher erläutert. In den Zeichnungen zeigen:
- Figur 1: eine perspektivische Ansicht eines zusammengesetzten Gitterturmes aus Eckstielen und Streben in den Seitenflächen des Gitterturmes;
- Figur 2: eine Explosionsdarstellung zu dem Gitterturm der Figur 1;
- Figur 3: eine Vergrößerung des Bereiches A aus Figur 2;
- Figur 4: den in Figur 3 dargestellten Knotenbereich im zusammengefügten Zustand aus einer anderen Perspektive gemäß einem ersten Ausführungsbeispiel;
- Figur 5: eine Ansicht gemäß Figur 4 in einer zweiten Ausführungsvariante;
- Figur 6: eine Detailansicht zum Ausschnitt B aus Figur 2;
- Figur 7: eine aus Streben und Teilschalen zusammengesetzte Seitenfläche eines Gitterturmes;
- Figuren 8a bis 8e: in stark vereinfachter Darstellung den Zusammenbau eines Gitterturmes aus vorgefertigten Gitterturmteilen und die
- Figuren 9a bis 9d: ein alternatives Verfahren zum Errichten eines Gitterturmes.

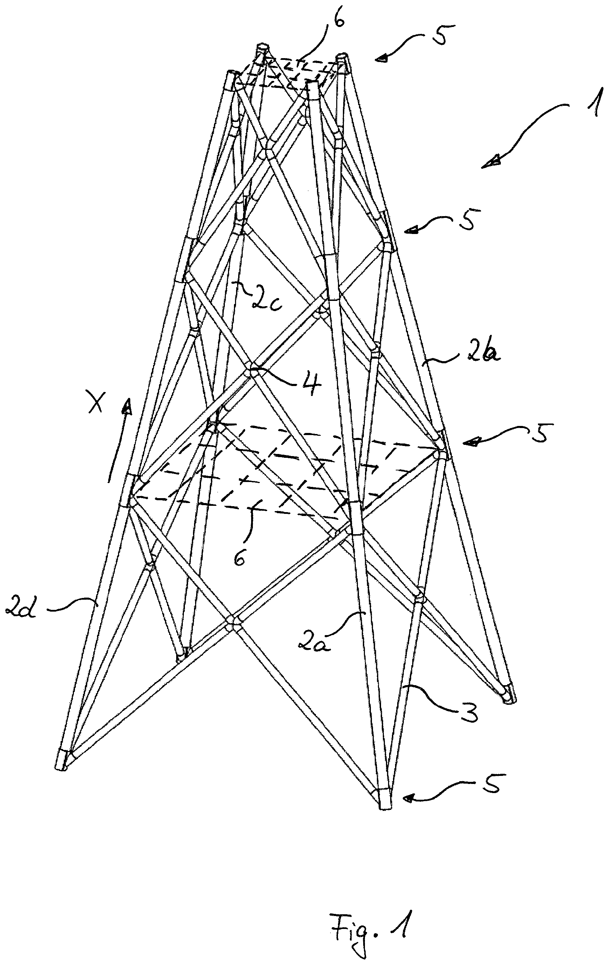

Die Fig. 1 zeigt in perspektivischer Ansicht einen errichteten Gitterturm 1, der z.B. als Gründungsstruktur für eine Offshore-Windenergieanlage dienen kann. Zur Befestigung am Meeresboden könnten daher in nicht dargestellter Weise bodenseitig Pfahlhülsen an den Eckstielen 2a bis 2d angeordnet sein zur Aufnahme von Gründungspfählen, wie dies z.B. in der EP 2 067 914 A2 in Fig. 1 dargestellt ist. Der Gitterturm der Fig.1 kann aber auch den Gitterturm einer Windenergieanlage bilden, indem auf dessen oberen offenen Ende die Gondel einer Windenergieanlage angeordnet wird, oder ein Rohrturmstück zur Ausbildung eines Hybridturmes, wie aus der DE 10339438 A1 bekannt. Es ist auch möglich, dass der gezeigte Gitterturm ein erstes Gitterturmsegment bildet, das mit weiteren gleichartigen Gitterturmsegmenten zu einem Gesamtturm zusammengefügt wird.

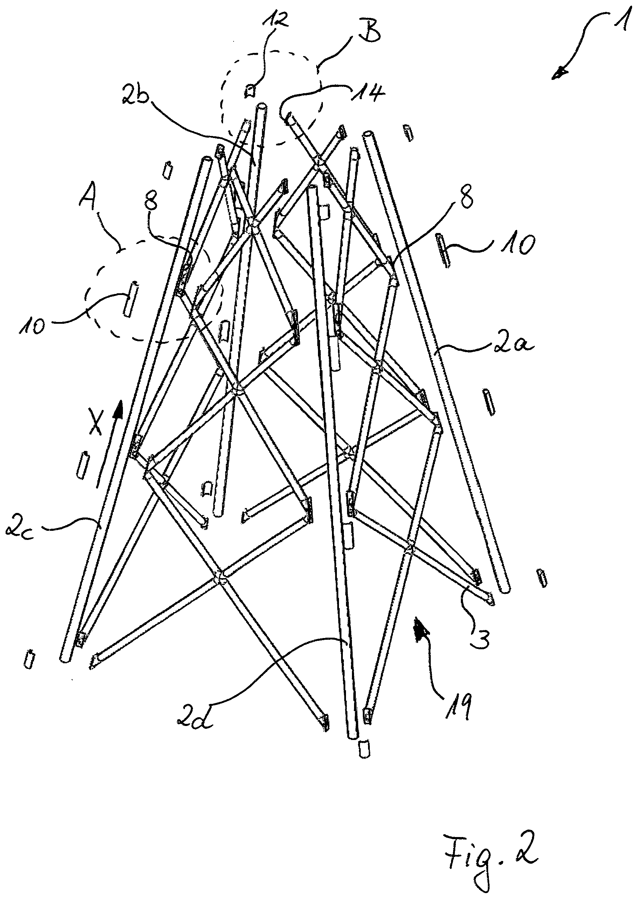

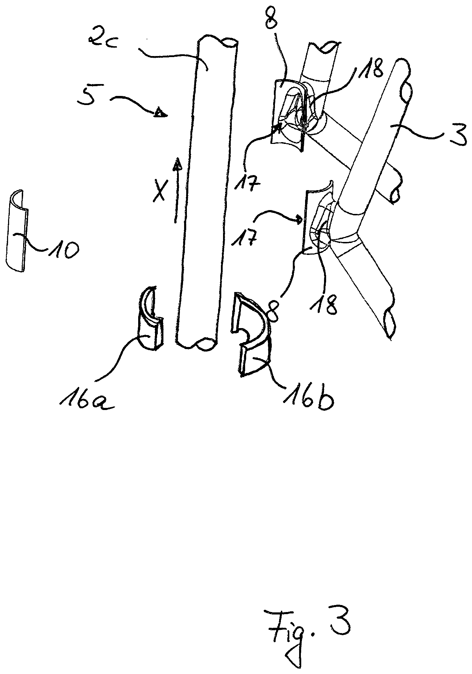

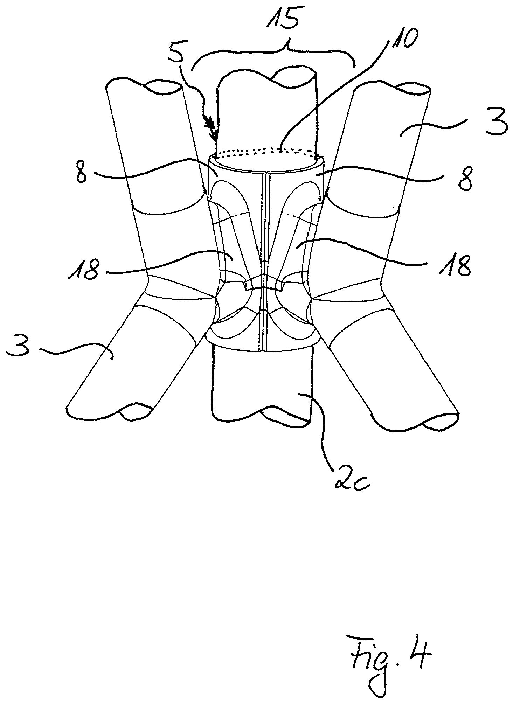

Der Aufbau des Gitterturms soll nachfolgend, in Zusammenschau mit der Fig. 2 sowie mit den Detailvergrößerungen in den Fig. 3 und 4 erläutert werden. Wie insbesondere aus den Fig. 3 und 4 ersichtlich, erfolgt die Befestigung der Streben 3 an den Eckstielen 2a, 2b, 2c, 2d über an den Streben 3 angeschweißte Knotenschalen 8, die paarweise und zusammen mit einer Hilfsschale 10 den Eckstiel 2c (Fig. 3 und Fig. 4) formschlüssig umgeben. Insbesondere aus Fig. 2 ist ersichtlich, dass die Eckstiele 2a-2d über mehrere Knotenebenen 6 hinweg als einstückiges Rohr ausgebildet sind, im gezeigten Beispiel der Fig.2 sind die Eckstiele 2a, 2b, 2c, 2d sogar über sämtliche Knotenebenen 6 hinweg als einstückiges Rohr ausgebildet.

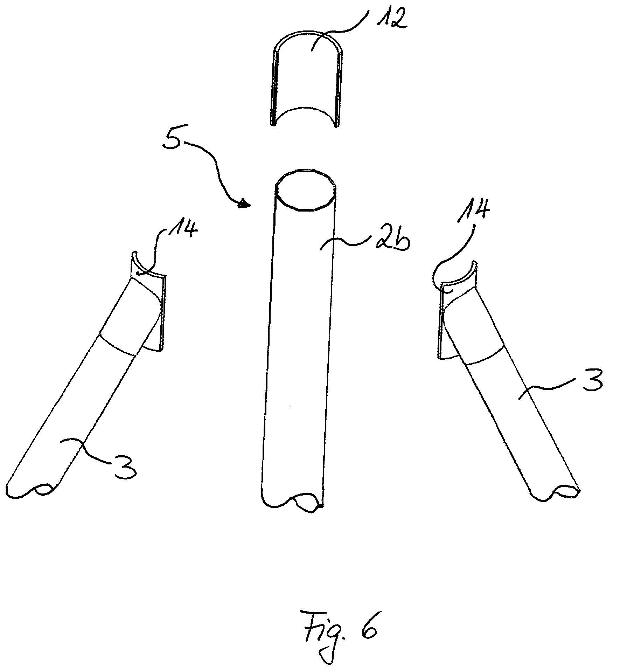

In Fig. 2 ist weiterhin erkennbar, dass zwischen benachbarten Paaren von Eckstielen 2a, 2b, 2c, 2d jeweils Seitenteile 19 angeordnet sind, die aus mehreren, im gezeigten Beispiel drei X-Verstrebungen bestehen. Aus der Detailansicht in den Fig. 3 und 4 ist ersichtlich, dass in den Knotenpunkten 5 zwischen zwei X-Verstrebungen zwei Streben 3 an einer gemeinsamen Knotenschale 8 befestigt sind. Bodenseitig und am oberen Gitterturmende sind, wie z.B. aus Fig. 6 erkennbar, die freien Enden der Streben 3 jeweils einzeln an einer Knotenschale 14 befestigt.

Aus Fig. 4 ist erkennbar, dass in der Montageposition die Knotenschalen 8 der in diesem Knoten 5 zusammenlaufenden Streben 3 den Eckstiel 2c formschlüssig umgreifen und insbesondere benachbarte Knotenschalen 8 unmittelbar aneinander grenzend eine Gesamtschale bilden, die zusammen mit einer Hilfsschale 10 einen den Eckstiel 2c im Knoten 5 vollständig umschließenden Ring 15 bilden. Dabei kann z.B. die Hilfsschale 10 eine 180°-Schale sein, während die Knotenschalen 8 jeweils 90°-Schalen sind. Es ist dabei zu beachten, dass z.B. bei Vorsehen weiterer Verstrebungen an dem Knoten 5 auch mehr als zwei Knotenschalen 8 zusammenlaufen können. Die Knotenschalen 8 müssten dann den Eckstiel 2c in einem kleineren Teilumfang umgreifen.

Im in Fig. 4 gezeigten Ausführungsbeispiel sind die Knotenschalen 8 als Stahlgussschalen ausgeführt, an die die Streben 3 bevorzugt mit ebenen Fügeflächen angeschweißt werden. Zur Befestigung der Streben 3 beziehungsweise der Knotenschalen 8 an die Eckstiele 2a, 2b, 2c, 2d wird ober- und unterhalb der Knotenschalen 8 eine ringförmige Schweißnaht angebracht sowie eine in Längsrichtung X des Eckstiels 2a, 2b, 2c, 2d verlaufende Schweißlinie zur Verbindung der beiden Knotenschalen 8 sowie zur Verbindung der beiden Knotenschalen 8 mit der Hilfsschale 10. Die Knotenschalen 8 und die Hilfsschale 10 lassen sich aber auch mit den Eckstielen 2a, 2b, 2c, 2d verkleben. Auch eine Kombination der genannten Befestigungsarten ist möglich.

In der in Fig. 3 prinzipienhaft dargestellten Weise könnte ober- oder unterhalb der Knotenschalen 8 bzw. der Hilfsschale 10 ein weiterer Stützring angeschweißt oder verklebt werden, der z.B. aus zwei 180°-Schalen 16a, 16b zusammengesetzt ist. Dieser Ring würde für eine zusätzliche axiale Stabilisierung in Längsrichtung X des Eckstiels 2c sorgen.

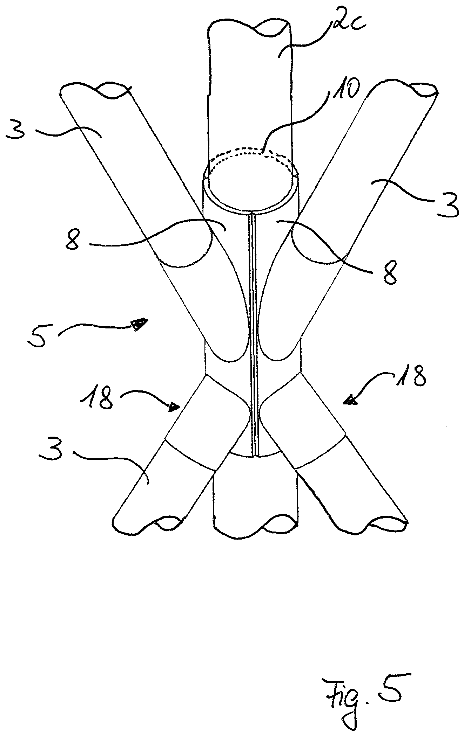

Fig. 5 zeigt in alternativer Ausbildung zu Fig. 4 einen Schweißknoten. An den in Fig. 5 dargestellten Knotenschalen 8 sind einen Befestigungsbereich bildende Befestigungsstücke 18 angeschweißt, an deren freien ebenen ringförmigen Fügeflächen dann die Streben 3 angeschweißt werden können. Auch hier erfolgt die Befestigung der Knotenschalen 8 am Eckstiel 2c über eine Verschweißung oder alternativ oder ergänzend über eine Verklebung. Dafür kann z.B. an der oberen und an der unteren Seite der Knotenschalen 8 und der Hilfsschale 10 eine ringförmige Schweißnaht gelegt werden sowie in vertikaler Richtung mehrere gerade Nähte, die die Knotenschalen 8 untereinander und die Knotenschalen 8 mit der Hilfsschale 10 verbindet.

Fig. 6 zeigt eine Vergrößerung des Bildausschnittes B in Fig. 2. Anders als in dem Vergrößerungsausschnitt A der Fig. 3 und 4 endet auf den im Bildausschnitt B gezeigten Knotenschalen 14 nur eine Strebe 3. Entsprechend ist die Knotenschale 14 in Achsrichtung X kürzer ausgebildet als die Knotenschale 8 der Fig. 4. Auch die Hilfsschale 12 ist in Achsrichtung X kürzer als die Hilfsschale 10. Im Übrigen ist aber die Befestigung der Knotenschalen 14 und der Hilfsschale 12 am Eckstiel 2b wie bereits oben erläutert auszuführen, z.B. durch Legen von zwei Ringschweißnähten ober- und unterhalb der Knotenschalen 14 sowie durch Legen von geraden Schweißnähten zwischen den benachbarten Knotenschalen 14 und der benachbarten Hilfsschale 12.

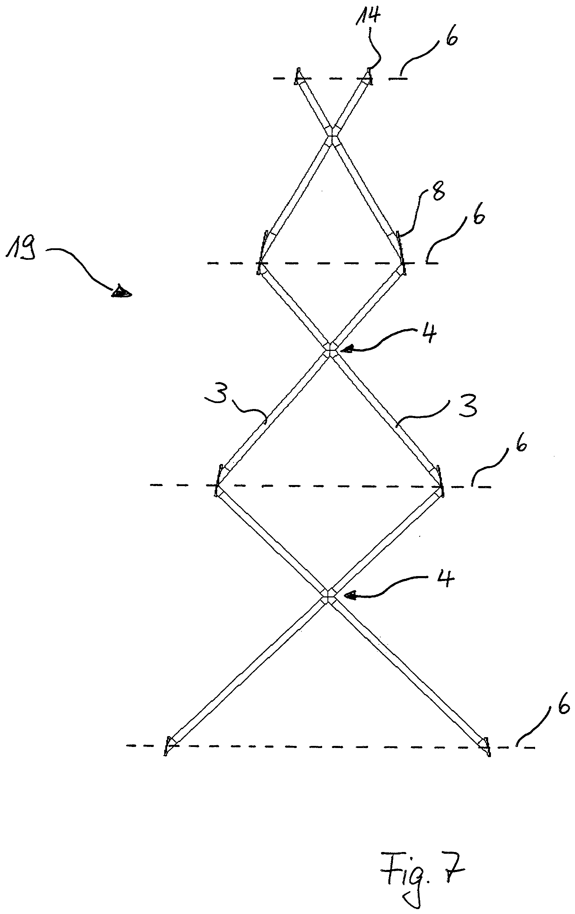

Fig. 7 zeigt in einer perspektivischen Ansicht ein Seitenteil 19, von dem der Gitterturm 1 der Fig. 1. insgesamt vier aufweist. Diese vier Seitenteile 19 können liegend vorgefertigt werden. Dazu werden z.B. zunächst Einzelstreben 3 mit Hilfe eines Guss- oder Schweißknotens 4 zu X-Verstrebungen zusammengeschweißt, und dann nachfolgend die X-Streben über Knotenschalen 8 zu einem stabilen und transportierbaren Seitenteil 19 gemäß Fig. 7 zusammengefügt.

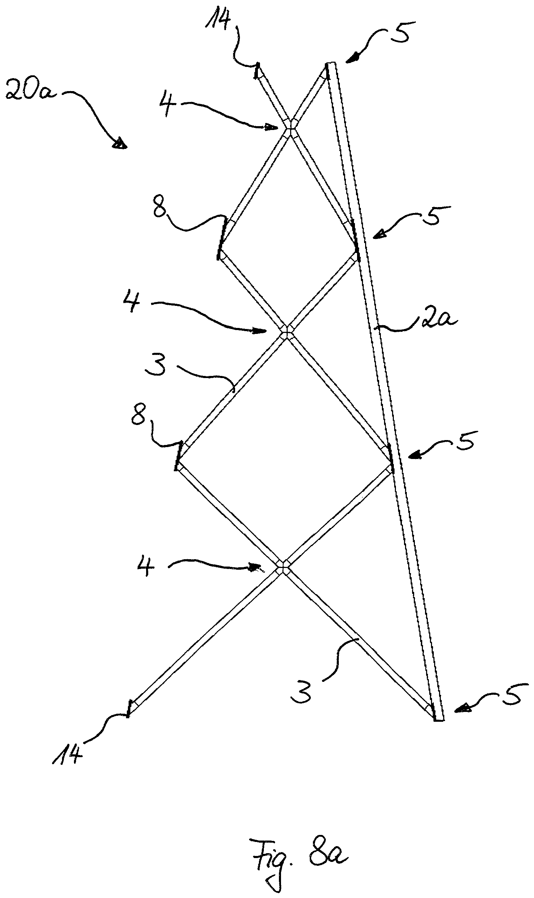

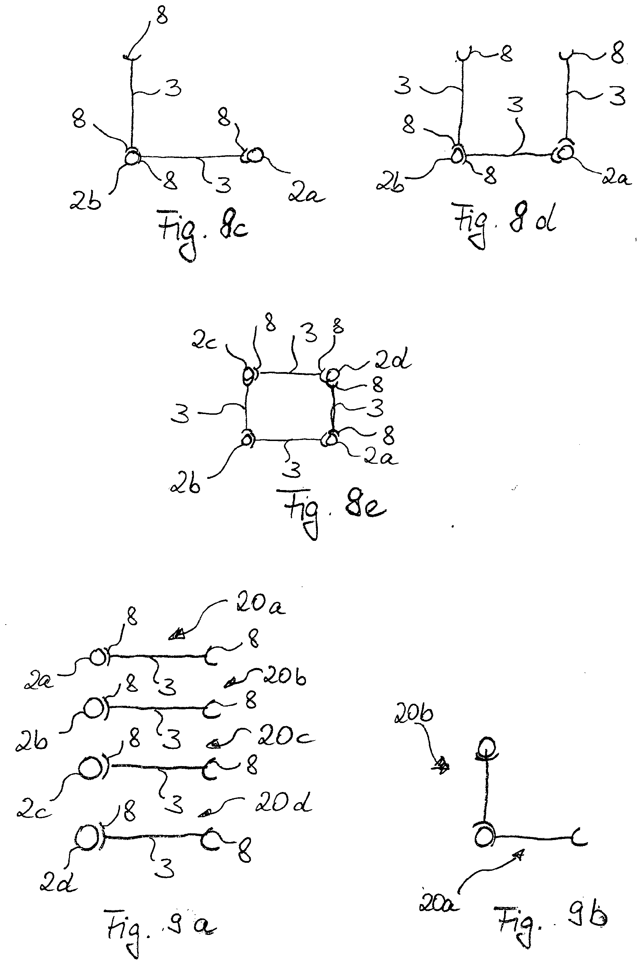

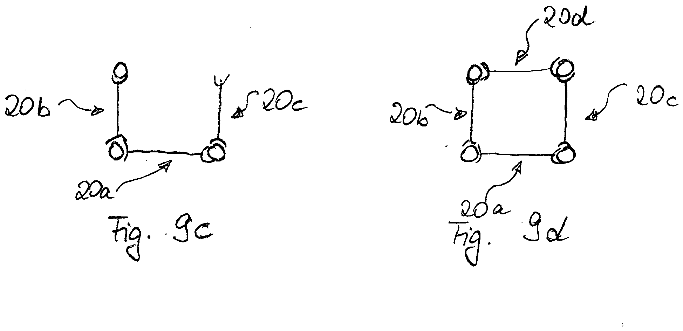

Für die Montage des Gitterturms 1 aus einzelnen vorgefertigten Turmmodulen besteht z.B. die in Fig. 8a dargestellte Möglichkeit, dass vier Module 20a, 20b, 20c, 20d jeweils bestehend aus einem Seitenteil 19 und einem einseitig an dem Seitenteil angebrachten Eckstiel 2a, 2b, 2c, 2d hergestellt werden. Diese vier bauidentischen Turmmodule 20a, 20b, 20c, 20d können dann wie in den Fig. 9a-9d gezeigt zu einem Gitterturm 1 zusammengesetzt werden. Dazu wird zunächst ein erstes Turmmodul 20a liegend angeordnet und ein zweites Turmmodul 20b so vertikal auf das erste Turmmodul 20a aufgesetzt, dass die freien Knotenschalen 8 des zweiten Moduls 20b in den Knotenbereichen 5 des ersten Eckstiels 2a des ersten Turmmoduls 20a auf diesem ersten Eckstiel 2a zur Anlage kommen. Es können dann die Schweißnähte zur Befestigung der Knotenschalen 8 an dem Eckstiel 2a gesetzt werden. In einem nächsten Schritt wird dann ein drittes Turmmodul 20c vertikal so angeordnet, dass der Eckstiel 2c des dritten Moduls 20c in dessen Knotenbereichen 5 in die noch freien Knotenschalen 8 des ersten Moduls 20a hineingelegt wird. Auch hier können dann die notwendigen Schweißnähte gelegt werden. Schließlich wird gemäß Fig. 9d, dann das vierte Turmmodul 20d so angeordnet, dass der vierte Eckstiel 2d in den freien Knotenschalen 8 des dritten Moduls 20c aufgenommen wird und die freien Knotenschalen 8 des vierten Moduls 20d zur Anlage mit dem Eckstiel 2b des zweiten Moduls 20b kommen. Es kann dann das vierte Modul 20d mit dem dritten Modul 20c und dem zweiten Modul 20b verschweißt werden. Nicht dargestellt sind in den Fig. 9b-9d die Hilfsschalen, die z.B. in jedem der in Fig. 9b-9d gezeigten Ausführungsbeispiele mit angeschweißt werden könnten, sobald an einem Eckstiel zwei Knotenschalen zusammentreffen.

Statt der vorstehend beschriebenen liegenden Montage ist auch eine stehende Montage denkbar. Dafür wären ggf. Hilfskonstruktionen bzw. Fundamente zur Stützung insbesondere des ersten Turmmoduls erforderlich.

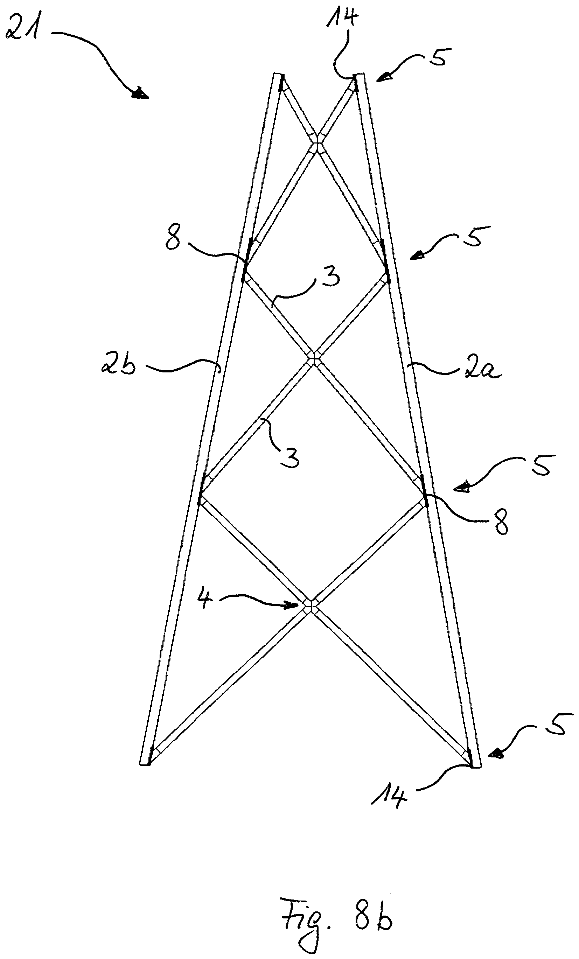

Ein alternatives Errichtungsverfahren ist z.B. dadurch möglich, dass zwei Seitenteile 19 gemäß Fig. 7 hergestellt werden und zusätzlich zwei Turmmodule 21 wie in Fig. 8b gezeigt. Gegenüber dem Turmmodul 20a der Fig. 8a ist beim Turmmodul 21 zu beiden Seiten eines Seitenteils 19 gemäß Fig. 7 ein Eckstiel 2a, 2b angeschweißt worden. Ausgangspunkt der Turmerrichtung sind daher zwei Seitenteile 19 ohne Eckstiel und zwei Seitenteile 19 mit jeweils zwei Eckstielen (Turmmodule 21). Der Zusammenbau des Gitterturms 1 erfolgt dann z.B. so, dass zunächst in liegender Position ein erstes Turmmodul 21 mit zwei Eckstielen 2a, 2b bereitgestellt wird. In vertikaler Richtung wird dann ein Seitenteil 19 ohne Eckstiele auf eines der Eckstiele 2b des ersten Moduls 21 so aufgelegt, dass die freien Knotenschalen 8 im Knotenbereich 5 auf dem Eckstiel 2b aufliegen. Die benachbarten Knotenschalen 8 werden dann aneinander und an dem Eckstiel 2b verschweißt. Zusätzlich kann eine Hilfsschale angeschweißt werden, wie dies z.B. in Fig. 4 dargestellt wurde.

In einem nächsten Schritt wird ein drittes Seitenteil 19 ohne Eckstiele auf den zweiten Eckstiel 2a des ersten Moduls 21 aufgelegt analog zu der vorher beschriebenen Anbringung des zweiten Seitenteils 19. Die Knotenschalen 8 werden wieder an den Eckstielen 2a durch Schweißung befestigt und gegebenenfalls ein 360°-Ring unter Zuhilfenahme einer Hilfsschale ausgebildet. Schließlich wird gemäß Fig. 8e das vierte Modul 21 mit zwei Eckstielen 2c, 2d auf die noch freien Knotenschalen 8 des zweiten und dritten Seitenteils 19 aufgelegt, und mittels weiterer Schweißnähte wird das vierte Modul 21, gegebenenfalls unter Verwendung weiterer Hilfsschalen, mit dem zweiten und dritten Seitenteil 19 verschweißt.

Auch hier ist eine stehende statt der beschriebenen liegenden Montage denkbar.

Aufgrund der vereinfachten Darstellung wurden in den Fig. 8c-8e und Fig. 9a-9d die jeweils in Längsrichtung X vor und hinter den Knotenschalen 8 angeordneten Knotenschalen 14 nicht gezeigt.

In sämtlichen Figuren sind Ausführungsformen ausschließlich mit Streben 3 auf den Seitenflächen des Turms 1 gezeigt. Der Turm könnte dadurch weiter verstärkt und stabilisiert werden, dass auch diagonal im Turminneren verlaufende Streben vorgesehen sind. Auch diese Streben würden an ihren Enden Knotenschalen aufweisen, die dann mit in der gleichen Knotenebene zusammenlaufenden Knotenschalen von X-Streben einen gemeinsamen, den Eckstiel umgebenden Ring ausbilden würden.

Die dargestellten Verstrebungen müssen auch nicht zwingend als "X"-Verstrebungen ausgeführt werden. Es sind beispielsweise auch einfache Diagonalverstrebungen denkbar. Die Querschnitte müssten dann entsprechend angepaßt werden, um die gleiche Belastbarkeit zu erreichen.

Bei dem Gitterturm kann es sich auch um einen Gitterturm für eine Windenergieanlage handeln, der aus mehreren übereinander angeordneten Gitterturmsegmenten zusammengesetzt wird, wobei mindestens ein Gitterturmsegment nach dem erfindungsgemäßen Verfahren errichtet wird.

Neben dem erwähnten Verschweißen und Verkleben der Knotenschalen (8, 14) mit den Eckstielen (2a, 2b, 2c, 2d) sind auch andere Verbindungstechniken denkbar, z.B. verklemmen, z.B. in der von einer Rohrschelle bekannten Art.

Die Knotenschalen (8, 14) können unmittelbar an den Eckstielen (2a, 2b, 2c, 2d) anliegen. Denkbar ist jedoch auch, dass zwischen Knotenschale (8, 14) und Eckstiel (2a, 2b, 2c, 2d) eine elastische Zwischeneinlage, beispielsweise in Form eines oder mehrerer Gummielemente, vorgesehen wird.

## Patentansprüche

1. Gitterturm (1) für eine Windenergieanlage, wobei der Gitterturm (1) wenigstens drei rohrförmige, sich jeweils in einer Längsrichtung X erstreckende Eckstiele (2a, 2b, 2c, 2d) und zwischen diesen Eckstielen (2a, 2b, 2c, 2d) verlaufende rohrförmige Streben (3) aufweist, wobei die Streben (3) bei errichtetem Gitterturm (1) mit den Eckstielen (2a, 2b, 2c, 2d) verbunden sind, wobei jeder Eckstiel (2a, 2b, 2c, 2d) mehrere in seiner Längsrichtung voneinander beabstandete, als Knoten (5) bezeichnete Bereiche aufweist, in denen die Streben (3) mit den Eckstielen (2a, 2b, 2c, 2d) verbunden sind, wobei die Knoten (5) benachbarter Eckstiele (2a, 2b, 2c, 2d) bei errichtetem Gitterturm (1) in einer gemeinsamen horizontalen Knotenebene (6) liegen, so dass der errichtete Gitterturm (1) mehrere in vertikaler Richtung voneinander beabstandete Knotenebenen (6) aufweist, wobei die Streben (3) an ihren eckstielseitigen Enden den Eckstielen (2a, 2b, 2c, 2d) anliegende Knotenschalen (8, 14) aufweisen, wobei die Knotenschalen (8, 14) so dimensioniert und ausgebildet sind, dass sie jeweils in einem Teilumfangsbereich von höchstens 180° an den Eckstielen (2a, 2b, 2c, 2d) anliegen, und wobei die Knotenschalen (8, 14) eines Knotens (5) mit dem Eckstiel (2a, 2b, 2c, 2d) und/oder miteinander verbunden sind, sodass die Knotenschalen (8, 14) einen Ring oder Teilring um den Eckstiel (2a, 2b, 2c, 2d) ausbilden, **dadurch gekennzeichnet, dass** die in einem Knoten (5) dem Eckstiel (2a, 2b, 2c, 2d) anliegenden Knotenschalen (8, 14) zueinander unmittelbar aneinandergrenzen und auch die von den Knotenschalen (8, 14) abgedeckten Teilumfangsbereiche zueinander unmittelbar aneinandergrenzen.

2. Gitterturm (1) nach Anspruch 1, **dadurch gekennzeichnet, dass** sich die Eckstiele (2a, 2b, 2c, 2d) in ihrer Längsrichtung X einteilig über mehrere Knotenebenen (6) hinweg erstrecken, insbesondere über alle Knotenebenen (6) hinweg einteilig ausgebildet sind.

3. Gitterturm (1) nach einem der vorhergehenden Ansprüche, **dadurch gekennzeichnet, dass** zumindest in den mittleren Knotenebenen (6) mehrere Streben (3) an einer gemeinsamen Knotenschale (8) befestigt sind.

4. Gitterturm (1) nach einem der vorhergehenden Ansprüche, **dadurch gekennzeichnet, dass** entweder die in einem Knoten (5) zusammentreffenden Knotenschalen (8, 14) zusammen den Eckstiel (2a, 2b, 2c, 2d) um mehr als 180° umschließen, oder dass die in einem Knoten (5) zusammentreffenden Knotenschalen (8, 14) zusammen mit einer Hilfsschale (10, 12) den Eckstiel (2a, 2b, 2c, 2d) um mehr als 180° umschließen, wobei die Hilfsschale (10, 12) mit dem Eckstiel (2a, 2b, 2c, 2d) und/oder mit den benachbarten Knotenschalen (8, 14) verbunden ist, sodass die Knotenschalen (8, 14) zusammen mit der Hilfsschale (10, 12) einen Ring (15) oder Teilring um den Eckstiel (2a, 2b, 2c, 2d) ausbilden.

5. Gitterturm (1) nach einem der vorhergehenden Ansprüche, **dadurch gekennzeichnet, dass** die Knotenschalen (8, 14) und/oder die Hilfsschalen (10, 12) aus einem Gusswerkstoff hergestellt sind, insbesondere aus Stahlguss.

6. Gitterturm (1) nach einem der vorhergehenden Ansprüche, **dadurch gekennzeichnet, dass** die Verbindung der Knotenschalen (8, 14) und/oder der Hilfsschalen (10, 12) aneinander durch Verschweißung ausgeführt ist.

7. Gitterturm (1) nach einem der vorhergehenden Ansprüche, **dadurch gekennzeichnet, dass** die Knotenschalen (8, 14) an den Streben (3) angeschweißt sind.

8. Verfahren zur Errichtung eines Gitterturmes (1) für eine Windenergieanlage nach einem der Ansprüche 1-7, wobei der Gitterturm (1) aus wenigstens drei rohrförmigen Eckstielen (2a, 2b, 2c, 2d) und zwischen den Eckstielen (2a, 2b, 2c, 2d) verlaufenden ebenen Seitenteilen (19) aus rohrförmigen Streben (3) aufgebaut wird, wobei jeder Eckstiel (2a, 2b, 2c, 2d) mehrere als Knoten (5) bezeichnete Bereiche aufweist, in denen die Streben (3) mit den Eckstielen verbunden sind, bestehend aus den folgenden Schritten:
a) Herstellen aller ebenen Seitenteile (19) in liegender Position durch Verbinden der zugehörigen Streben (3) in einer Ebene, und durch
b) Anbringen von Knotenschalen (8, 14) an den freien Enden der Streben (3), wobei die Knotenschalen (8, 14) ausgebildet sind, die Eckstiele (2a, 2b, 2c, 2d) in deren Knoten (5) in einem Teilumfang zu umschließen;
c) Herstellen eines ersten ebenen Turmmoduls (21) durch Verbinden eines ersten ebenen Seitenteiles (19) mit zwei Eckstielen (2a, 2b, 2c, 2d) in liegender Position durch Verbinden der Knotenschalen (8, 14) im Knotenbereich der beiden Eckstiele (2a, 2b, 2c, 2d);
d) Herstellen eines zweiten ebenen Turmmoduls (21) durch Verbinden eines zweiten ebenen Seitenteiles (19) an zwei Eckstielen (2a, 2b, 2c, 2d) in liegender Position durch Verbinden der Knotenschalen (8, 14) im Knotenbereich mit beiden Eckstielen (2a, 2b, 2c, 2d);
e) Verbinden der weiteren Seitenteile (19) mit dem ersten Turmmodul (21) und dem zweiten Turmmodul (21) durch Verbinden der Knotenschalen (8, 14) der weiteren Seitenteile (19) im Knotenbereich mit den Eckstielen (2a, 2b, 2c, 2d) und mit den Knotenschalen (8, 14) des ersten Turmmoduls (21) und/oder des zweiten Turmmoduls (21) im Knotenbereich (5),
f) ggf. Aufrichten des Gitterturmes (1), wenn der Zusammenbau in liegender Position erfolgt ist.

9. Gitterturm (1) für eine Windenergieanlage, wobei der Gitterturm (1) wenigstens drei rohrförmige, sich jeweils in einer Längsrichtung X erstreckende Eckstiele (2a, 2b, 2c, 2d) und zwischen diesen Eckstielen (2a, 2b, 2c, 2d) verlaufende rohrförmige Streben (3) aufweist, wobei die Streben (3) bei errichtetem Gitterturm (1) mit den Eckstielen (2a, 2b, 2c, 2d) verbunden sind, wobei jeder Eckstiel (2a, 2b, 2c, 2d) mehrere in seiner Längsrichtung X voneinander beabstandete, als Knoten (5) bezeichneten Bereiche aufweist, in denen die Streben (3) mit den Eckstielen (2a, 2b, 2c, 2d) verbunden sind, wobei die Knoten (5) benachbarter Eckstiele (2a, 2b, 2c, 2d) bei errichtetem Gitterturm (1) in einer gemeinsamen horizontalen Knotenebene (6) liegen, so dass der errichtete Gitterturm (1) mehrere in vertikaler Richtung voneinander beabstandete Knotenebenen (6) aufweist, wobei die Streben (3) an ihren eckstielseitigen Enden den Eckstielen (2a, 2b, 2c, 2d) anliegende Knotenschalen (8, 14) aufweisen, **dadurch gekennzeichnet, dass** der Gitterturm (1) aus vorgefertigten Modulen (19, 21; 20a, 20b, 20c, 20d) hergestellt ist, wobei wenigstens eines der vorgefertigten Module (21; 20a, 20b, 20c, 20d) aus einem ebenen Seitenteil (19) und wenigstens einem damit verbundenen Eckstiel (2a, 2b, 2c, 2d) besteht, wobei das ebene Seitenteil (19) gebildet ist durch Verbinden der zugehörigen Streben in einer Ebene.

10. Gitterturm nach Anspruch 9, **dadurch gekennzeichnet, dass** wenigstens eines der vorgefertigten Module (21) aus einem ebenen Seitenteil (19) und zwei damit verbundenen Eckstielen (2a, 2b, 2c, 2d) besteht.

11. Verfahren zur Errichtung eines Gitterturmes (1) für eine Windenergieanlage nach einem der Ansprüche 9 und 10, wobei der Gitterturm (1) aus wenigstens drei rohrförmigen Eckstielen (2a, 2b, 2c, 2d) und zwischen den Eckstielen (2a, 2b, 2c, 2d) verlaufenden ebenen Seitenteilen (19) aus rohrförmigen Streben (3) aufgebaut wird, bestehend aus den folgenden Schritten:
a) Herstellen aller ebenen Seitenteile (19) in liegender Position durch Verbinden der zugehörigen Streben (3) in einer Ebene;
b) Anbringen von Knotenschalen (8, 14) an den freien Enden der Streben (3), wobei die Knotenschalen (8, 14) ausgebildet sind, die Eckstiele (2a, 2b, 2c, 2d) in deren Knoten (5) in einem Teilumfang zu umschließen;
c) Herstellen mehrerer ebener Turmmodule (20a, 20b, 20c, 20d) durch Anbringen jeweils eines Eckstieles (2a, 2b, 2c, 2d) an jedem der ebenen Seitenteile (19) in liegender Position durch Verbinden der jeweiligen Knotenschalen (8, 14) mit dem jeweiligen Eckstiel (2a, 2b, 2c, 2d),
d) Verbinden eines zweiten ebenen Turmmoduls (20b) mit einem ersten ebenen Turmmodul (20a) durch Verbinden der Knotenschalen (8, 14) mit den Eckstielen (2a, 2b);
e) Verbinden der weiteren ebenen Turmmodule (20c, 20d) mit dem ersten Turmmodul (20a) und dem zweiten Turmmodul (20b) durch Verbinden der Knotenschalen (8, 14) der weiteren Turmmodule (20c, 20d) mit den Eckstielen (2a, 2b, 2c, 2d) und mit den Knotenschalen (8, 14) des ersten Turmmoduls (20a) und/oder des zweiten Turmmoduls (20b),
f) ggf. Aufrichten des Gitterturmes (1), wenn der Zusammenbau in liegender Position erfolgt ist.

12. Verfahren nach einem der vorhergehenden Ansprüche 8 oder 11, **dadurch gekennzeichnet, dass** Korrosionsschutzmittel auf die Eckstiele (2a, 2b, 2c, 2d) und auf die Seitenteile (19) aufgebracht wird, bevor die Eckstiele (2a, 2b, 2c, 2d) mit den Seitenteilen (19) verbunden werden.

13. Verfahren nach einem der vorhergehenden Ansprüche 8, 11 oder 12, **dadurch gekennzeichnet, dass** unmittelbar oberhalb und/oder unmittelbar unterhalb der Knotenschalen (8, 14) einteilige oder mehrteilige Sicherungsringe (16a, 16b) am Eckstiel (2a, 2b, 2c, 2d) und/oder an den Knotenschalen (8, 14) befestigt werden.

14. Verfahren nach einem der vorhergehenden Ansprüche 8 oder 11-13, **dadurch gekennzeichnet, dass** in den Knoten (5) Hilfsschalen (10, 12) befestigt werden, die zusammen mit den Knotenschalen (8, 14) den Eckstiel (2a, 2b, 2c, 2d) über einen Umfangswinkel von mehr als 180°umschließen, wobei die Knotenschalen (8, 14) und die Hilfsschalen (10, 12) insbesondere einen geschlossenen Ring (15) bilden.

15. Verfahren nach einem der vorhergehenden Ansprüche 8 oder 11-14, **dadurch gekennzeichnet, dass** im Befestigungsbereich (18) zwischen Strebe (3) und Knotenschale (8, 14) eine Gegenlage gelegt wird, insbesondere eine Gegenschweißung erfolgt.

## Claims

1. Lattice tower (1) for a wind power plant, the lattice tower (1) having at least three tubular corner legs (2a, 2b, 2c, 2d) which extend in each case in a longitudinal direction X and tubular struts (3) which run between the said corner legs (2a, 2b, 2c, 2d), the struts (3) being connected to the corner legs (2a, 2b, 2c, 2d) in the case of an erected lattice tower (1), each corner leg (2a, 2b, 2c, 2d) having a plurality of regions which are spaced apart from one another in its longitudinal direction and are called nodes (5), in which the struts (3) are connected to the corner legs (2a, 2b, 2c, 2d), the nodes (5) of adjacent corner legs (2a, 2b, 2c, 2d) lying in a common horizontal node plane (6) in the case of an erected lattice tower (1), with the result that the erected lattice tower (1) has a plurality of node planes (6) which are spaced apart from one another in the vertical direction, the struts (3) having, at their corner leg-side ends, node shells (8, 14) which bear against the corner legs (2a, 2b, 2c, 2d), the node shells (8, 14) being dimensioned and configured in such a way that they bear against the corner legs (2a, 2b, 2c, 2d) in each case in a part circumferential region of at most 180°, and the node shells (8, 14) of a node (5) being connected to the corner leg (2a, 2b, 2c, 2d) and/or to one another, with the result that the node shells (8, 14) form a ring or part ring around the corner leg (2a, 2b, 2c, 2d), **characterized in that** the node shells (8, 14) which bear against the corner leg (2a, 2b, 2c, 2d) in a node (5) adjoin one another directly, and the part circumferential regions which are covered by the node shells (8, 14) also adjoin one another directly.

2. Lattice tower (1) according to Claim 1, **characterized in that** the corner legs (2a, 2b, 2c, 2d) extend in one piece in the longitudinal direction X over a plurality of node planes (6), in particular are configured in one piece over all node planes (6) .

3. Lattice tower (1) according to either of the preceding claims, **characterized in that** a plurality of struts (3) are fastened to a common node shell (8) at least in the middle node planes (6).

4. Lattice tower (1) according to one of the preceding claims, **characterized in that** either the node shells (8, 14) which meet in an node (5) together enclose the corner leg (2a, 2b, 2c, 2d) by more than 180°, or **in that** the node shells (8, 14) which meet in a node (5) enclose, together with an auxiliary shell (10, 12), the corner leg (2a, 2b, 2c, 2d) by more than 180°, the auxiliary shell (10, 12) being connected to the corner leg (2a, 2b, 2c, 2d) and/or to the adjacent node shells (8, 14), with the result that, together with the auxiliary shell (10, 12), the node shells (8, 14) configure a ring (15) or part ring around the corner leg (2a, 2b, 2c, 2d).

5. Lattice tower (1) according to one of the preceding claims, **characterized in that** the node shells (8, 14) and/or the auxiliary shells (10, 12) are manufactured from a cast material, in particular from cast steel.

6. Lattice tower (1) according to one of the preceding claims, **characterized in that** the connection of the node shells (8, 14) and/or the auxiliary shells (10, 12) to one another is configured by way of welding.

7. Lattice tower (1) according to one of the preceding claims, **characterized in that** the node shells (8, 14) are welded to the struts (3).

8. Method for erecting a lattice tower (1) for a wind power plant according to one of Claims 1 to 7, the lattice tower (1) being constructed from at least three tubular corner legs (2a, 2b, 2c, 2d) and planar side parts (19) which run between the corner legs (2a, 2b, 2c, 2d) and comprise tubular struts (3), each corner leg (2a, 2b, 2c, 2d) having a plurality of regions which are called nodes (5), in which the struts (3) are connected to the corner legs, consisting of the following steps:
a) producing of all planar side parts (19) in a horizontal position by way of connection of the associated struts (3) in one plane, and by way of
b) attaching of node shells (8, 14) to the free ends of the struts (3), the node shells (8, 14) being configured to enclose the corner legs (2a, 2b, 2c, 2d) in their nodes (5) in a part circumference;
c) producing of a first planar tower module (21) by way of connection of a first planar side part (19) to the two corner legs (2a, 2b, 2c, 2d) in a horizontal position by way of connection of the node shells (8, 14) in the node region of the two corner legs (2a, 2b, 2c, 2d);
d) producing of a second planar tower module (21) by way of connection of a second planar side part (19) to the two corner legs (2a, 2b, 2c, 2d) in a horizontal position by way of connection of the node shells (8, 14) in the node region to the two corner legs (2a, 2b, 2c, 2d);
e) connecting of the further side parts (19) to the first tower module (21) and the second tower module (21) by way of connection of the node shells (8, 14) of the further side parts (19) in the node region to the corner legs (2a, 2b, 2c, 2d) and to the node shells (8, 14) of the first tower module (21) and/or the second tower module (21) in the node region (5),
f) possibly setting upright of the lattice tower (1) when the assembly has taken place in the horizontal position.

9. Lattice tower (1) for a wind power plant, the lattice tower (1) having at least three tubular corner legs (2a, 2b, 2c, 2d) which extend in each case in a longitudinal direction X and tubular struts (3) which run between the said corner legs (2a, 2b, 2c, 2d), the struts (3) being connected to the corner legs (2a, 2b, 2c, 2d) in the case of an erected lattice tower (1), each corner leg (2a, 2b, 2c, 2d) having a plurality of regions which are spaced apart from one another in its longitudinal direction X and are called nodes (5), in which the struts (3) are connected to the corner legs (2a, 2b, 2c, 2d), the nodes (5) of adjacent corner legs (2a, 2b, 2c, 2d) lying in a common horizontal node plane (6) in the case of an erected lattice tower (1), with the result that the erected lattice tower (1) has a plurality of node planes (6) which are spaced apart from one another in the vertical direction, the struts (3) having, at their corner leg-side ends, node shells (8, 14) which bear against the corner legs (2a, 2b, 2c, 2d), **characterized in that** the lattice tower (1) is produced from prefabricated modules (19, 21; 20a, 20b, 20c, 20d), at least one of the prefabricated modules (21; 20a, 20b, 20c, 20d) consisting of a planar side part (19) and at least one corner leg (2a, 2b, 2c, 2d) which is connected to it, the planar side part (19) being formed by way of connection of the associated struts in one plane.

10. Lattice tower according to Claim 9, **characterized in that** at least one of the prefabricated modules (21) consists of a planar side part (19) and two corner legs (2a, 2b, 2c, 2d) which are connected to it.

11. Method for erecting a lattice tower (1) for a wind power plant according to either of Claims 9 and 10, the lattice tower (1) being constructed from at least three tubular corner legs (2a, 2b, 2c, 2d) and planar side parts (19) which run between the corner legs (2a, 2b, 2c, 2d) and consist of tubular struts (3), consisting of the following steps:
a) producing of all planar side parts (19) in a horizontal position by way of connection of the associated struts (3) in one plane;
b) attaching of node shells (8, 14) to the free ends of the struts (3), the node shells (8, 14) being configured to enclose the corner legs (2a, 2b, 2c, 2d) in their nodes in a part circumference;
c) producing of a plurality of planar tower modules (20a, 20b, 20c, 20d) by way of attaching of in each case one corner leg (2a, 2b, 2c, 2d) to each of the planar side parts (19) in a horizontal position by way of connection of the respective node shells (8, 14) to the respective corner leg (2a, 2b, 2c, 2d),
d) connecting of a second planar tower module (20b) to a first planar tower module (20a) by way of connection of the node shells (8, 14) to the corner legs (2a, 2b);
e) connecting of the further planar tower modules (20c, 20d) to the first tower module (20a) and the second tower module (20b) by way of connection of the node shells (8, 14) of the further tower modules (20c, 20d) to the corner legs (2a, 2b, 2c, 2d) and to the node shells (8, 14) of the first tower module (20a) and/or of the second tower module (20b),
f) possibly setting upright of the lattice tower (1) when the assembly has taken place in the horizontal position.

12. Method according to either of the preceding Claims 8 and 11, **characterized in that** anti-corrosion agent is applied to the corner legs (2a, 2b, 2c, 2d) and to the side parts (19) before the corner legs (2a, 2b, 2c, 2d) are connected to the side parts (19).

13. Method according to one of the preceding Claims 8, 11 or 12, **characterized in that** single-piece or multiple-piece securing rings (16a, 16b) are fastened to the corner leg (2a, 2b, 2c, 2d) and/or to the node shells (8, 14) directly above and/or directly below the node shells (8, 14).

14. Method according to one of the preceding Claims 8 or 11 to 13, **characterized in that** auxiliary shells (10, 12) are fastened in the nodes (5), which auxiliary shells (10, 12), together with the node shells (8, 14), enclose the corner leg (2a, 2b, 2c, 2d) over a circumferential angle of more than 180°, the node shells (8, 14) and the auxiliary shells (10, 12) forming, in particular, a closed ring (15) .

15. Method according to one of the preceding Claims 8 or 11 to 14, **characterized in that** a support is placed, in particular a back-weld is carried out, in the fastening region (18) between the strut (3) and the node shell (8, 14).

## Revendications

1. Pylône en treillis (1) pour une éolienne, le pylône en treillis (1) présentant au moins trois montants d'angle (2a, 2b, 2c, 2d) tubulaires s'étendant chacun dans une direction longitudinale X et des entretoises tubulaires (3) s'étendant entre ces montants d'angle (2a, 2b, 2c, 2d), les entretoises (3) étant reliées aux montants d'angle (2a, 2b, 2c, 2d) lorsque le pylône en treillis (1) est érigé, chaque montant d'angle (2a, 2b, 2c, 2d) présentant plusieurs régions espacées les unes des autres dans sa direction longitudinale, désignées par nœuds (5), dans lesquelles les entretoises (3) sont reliées aux montants d'angle (2a, 2b, 2c, 2d), les nœuds (5) de montants d'angle (2a, 2b, 2c, 2d) adjacents étant situés dans un plan de nœuds horizontal commun (6) lorsque le pylône en treillis (1) est érigé, de telle sorte que le pylône en treillis (1) érigé présente plusieurs plans de nœuds (6) espacés les uns des autres dans la direction verticale, les entretoises (3) présentant, au niveau de leurs extrémités côté montants d'angle, des coques de nœuds (8, 14) s'appliquant contre les montants d'angle (2a, 2b, 2c, 2d), les coques de nœuds (8, 14) étant dimensionnées et réalisées de telle sorte qu'elles s'appliquent à chaque fois contre les montants d'angle (2a, 2b, 2c, 2d) dans une plage périphérique partielle maximale de 180°, et les coques de nœuds (8, 14) d'un nœud (5) étant reliées au montant d'angle (2a, 2b, 2c, 2d) et/ou les unes aux autres de telle sorte que les coques de nœuds (8, 14) forment un anneau ou un anneau partiel autour du montant d'angle (2a, 2b, 2c, 2d), **caractérisé en ce que** les coques de nœuds (8, 14) s'appliquant dans un nœud (5) contre le montant d'angle (2a, 2b, 2c, 2d) sont directement adjacentes les unes aux autres et les régions périphériques partielles recouvertes par les coques de nœuds (8, 14) sont également directement adjacentes les unes aux autres.

2. Pylône en treillis (1) selon la revendication 1, **caractérisé en ce que** les montants d'angle (2a, 2b, 2c, 2d) s'étendent dans leur direction longitudinale X d'une seule pièce au-delà de plusieurs plans de nœuds (6), en particulier sont réalisés d'une seule pièce au-delà de tous les plans de nœuds (6).

3. Pylône en treillis (1) selon l'une quelconque des revendications précédentes, **caractérisé en ce qu'**au moins dans les plans de nœuds centraux (6), plusieurs entretoises (3) sont fixées à une coque de nœud commune (8).

4. Pylône en treillis (1) selon l'une quelconque des revendications précédentes, **caractérisé en ce que** les coques de nœuds (8, 14) se rejoignant dans un nœud (5) entourent ensemble le montant d'angle (2a, 2b, 2c, 2d) sur plus de 180°, ou **en ce que** les coques de nœuds (8, 14) se rejoignant dans un nœud (5) entourent, conjointement avec une coque auxiliaire (10, 12), le montant d'angle (2a, 2b, 2c, 2d) sur plus de 180°, la coque auxiliaire (10, 12) étant reliée au montant d'angle (2a, 2b, 2c, 2d) et/ou aux coques de nœuds adjacentes (8, 14), de telle sorte que les coques de nœuds (8, 14) conjointement avec la coque auxiliaire (10, 12) forment un anneau (15) ou un anneau partiel autour du montant d'angle (2a, 2b, 2c, 2d).

5. Pylône en treillis (1) selon l'une quelconque des revendications précédentes, **caractérisé en ce que** les coques de nœuds (8, 14) et/ou les coques auxiliaires (10, 12) sont fabriquées à partir d'un matériau en fonte, en particulier en fonte d'acier.

6. Pylône en treillis (1) selon l'une quelconque des revendications précédentes, **caractérisé en ce que** la liaison des coques de nœuds (8, 14) et/ou des coques auxiliaires (10, 12) les unes aux autres est réalisée par soudage.

7. Pylône en treillis (1) selon l'une quelconque des revendications précédentes, **caractérisé en ce que** les coques de nœuds (8, 14) sont soudées aux entretoises (3).

8. Procédé pour ériger un pylône en treillis (1) pour une éolienne selon l'une quelconque des revendications 1 à 7, dans lequel le pylône en treillis (1) est constitué d'au moins trois montants d'angle (2a, 2b, 2c, 2d) tubulaires et de parties latérales planes (19) s'étendant entre les montants d'angle (2a, 2b, 2c, 2d), constituées d'entretoises tubulaires (3), chaque montant d'angle (2a, 2b, 2c, 2d) présentant plusieurs régions désignées par nœuds (5), dans lesquelles les entretoises (3) sont reliées aux montants d'angle, le procédé comprenant les étapes suivantes:
a) fabrication de toutes les parties latérales planes (19) en position couchée par liaison des entretoises associées (3) dans un plan, et par
b) application de coques de nœuds (8, 14) aux extrémités libres des entretoises (3), les coques de nœuds (8, 14) étant réalisées de manière à entourer sur une périphérie partielle les montants d'angle (2a, 2b, 2c, 2d) dans leurs nœuds (5) ;
c) fabrication d'un premier module de pylône plan (21) par liaison d'une première partie latérale plane (19) avec deux montants d'angle (2a, 2b, 2c, 2d) en position couchée par liaison des coques de nœuds (8, 14) dans la région des nœuds des deux montants d'angle (2a, 2b, 2c, 2d) ;
d) fabrication d'un deuxième module de pylône plan (21) par liaison d'une deuxième partie latérale plane (19) avec deux montants d'angle (2a, 2b, 2c, 2d) en position couchée par liaison des coques de nœuds (8, 14) dans la région des nœuds aux deux montants d'angle (2a, 2b, 2c, 2d) ;
e) liaison des parties latérales supplémentaires (19) au premier module de pylône (21) et au deuxième module de pylône (21) par liaison des coques de nœuds (8, 14) des parties latérales supplémentaires (19) dans la région des nœuds aux montants d'angle (2a, 2b, 2c, 2d) et aux coques de nœuds (8, 14) du premier module de pylône (21) et/ou du deuxième module de pylône (21) dans la région des nœuds (5),
f) éventuellement érection du pylône en treillis (1) une fois l'assemblage effectué en position couchée.

9. Pylône en treillis (1) pour une éolienne, le pylône en treillis (1) présentant au moins trois montants d'angle (2a, 2b, 2c, 2d) tubulaires s'étendant chacun dans une direction longitudinale X et des entretoises tubulaires (3) s'étendant entre ces montants d'angle (2a, 2b, 2c, 2d), les entretoises (3) étant reliées aux montants d'angle (2a, 2b, 2c, 2d) lorsque le pylône en treillis (1) est érigé, chaque montant d'angle (2a, 2b, 2c, 2d) présentant plusieurs régions espacées les unes des autres dans sa direction longitudinale X, désignées par nœuds (5), dans lesquelles les entretoises (3) sont reliées aux montants d'angle (2a, 2b, 2c, 2d), les nœuds (5) de montants d'angle (2a, 2b, 2c, 2d) adjacents étant situés dans un plan de nœuds horizontal commun (6) lorsque le pylône en treillis (1) est érigé, de telle sorte que le pylône en treillis (1) érigé présente plusieurs plans de nœuds (6) espacés les uns des autres dans la direction verticale, les entretoises (3) présentant, au niveau de leurs extrémités côté montants d'angle, des coques de nœuds (8, 14) s'appliquant contre les montants d'angle (2a, 2b, 2c, 2d), **caractérisé en ce que** le pylône en treillis (1) est fabriqué à partir de modules préfabriqués (19, 21 ; 20a, 20b, 20c, 20d), au moins l'un des modules préfabriqués (21 ; 20a, 20b, 20c, 20d) se composant d'une partie latérale plane (19) et d'au moins un montant d'angle (2a, 2b, 2c, 2d) relié à celle-ci, la partie latérale plane (19) étant formée par liaison des entretoises associées dans un plan.

10. Pylône en treillis selon la revendication 9, **caractérisé en ce qu'**au moins l'un des modules préfabriqués (21) se compose d'une partie latérale plane (19) et de deux montants d'angle (2a, 2b, 2c, 2d) reliés à celle-ci.

11. Procédé pour ériger un pylône en treillis (1) pour une éolienne selon l'une quelconque des revendications 9 et 10, dans lequel le pylône en treillis (1) est constitué d'au moins trois montants d'angle (2a, 2b, 2c, 2d) tubulaires et de parties latérales planes (19) s'étendant entre les montants d'angle (2a, 2b, 2c, 2d), constituées d'entretoises tubulaires (3), le procédé comprenant les étapes suivantes:
a) fabrication de toutes les parties latérales planes (19) en position couchée par liaison des entretoises associées (3) dans un plan;
b) application de coques de nœuds (8, 14) aux extrémités libres des entretoises (3), les coques de nœuds (8, 14) étant réalisées de manière à entourer sur une périphérie partielle les montants d'angle (2a, 2b, 2c, 2d) dans leurs nœuds (5) ;
c) fabrication de plusieurs modules de pylône plans (20a, 20b, 20c, 20d) par application à chaque fois d'un montant d'angle (2a, 2b, 2c, 2d) contre chacune des parties latérales planes (19) en position couchée par liaison des coques de nœuds respectives (8, 14) au montant d'angle (2a, 2b, 2c, 2d) respectif,
d) liaison d'un deuxième module de pylône plan (20b) à un premier module de pylône plan (20a) par liaison des coques de nœuds (8, 14) aux montants d'angle (2a, 2b);
e) liaison des modules de pylône plans supplémentaires (20c, 20d) au premier module de pylône (20a) et au deuxième module de pylône (20b) par liaison des coques de nœuds (8, 14) des modules de pylône supplémentaires (20c, 20d) aux montants d'angle (2a, 2b, 2c, 2d) et aux coques de nœuds (8, 14) du premier module de pylône (20a) et/ou du deuxième module de pylône (20b),
f) éventuellement érection du pylône en treillis (1) une fois l'assemblage effectué en position couchée.

12. Procédé selon l'une quelconque des revendications précédentes 8 et 11, **caractérisé en ce que** des moyens de protection contre la corrosion sont appliqués sur les montants d'angle (2a, 2b, 2c, 2d) et sur les parties latérales (19), avant que les montants d'angle (2a, 2b, 2c, 2d) ne soient reliés aux parties latérales (19).

13. Procédé selon l'une quelconque des revendications précédentes 8, 11 et 12, **caractérisé en ce que** directement au-dessus et/ou directement en dessous des coques de nœuds (8, 14), des anneaux de fixation d'une seule pièce ou en plusieurs parties (16a, 16b) sont fixés au montant d'angle (2a, 2b, 2c, 2d) et/ou aux coques de nœuds (8, 14).

14. Procédé selon l'une quelconque des revendications précédentes 8 ou 11 à 13, **caractérisé en ce que** dans les nœuds (5) sont fixées des coques auxiliaires (10, 12), qui, conjointement avec les coques de nœuds (8, 14), entourent le montant d'angle (2a, 2b, 2c, 2d) sur un angle périphérique supérieur à 180°, les coques de nœuds (8, 14) et les coques auxiliaires (10, 12) formant notamment un anneau fermé (15).

15. Procédé selon l'une quelconque des revendications précédentes 8 ou 11 à 14, **caractérisé en ce que** dans la région de fixation (18) entre l'entretoise (3) et la coque de nœud (8, 14) est placée une contre-couche, en particulier est réalisé un contre-soudage.
